**Europäisches Patentamt**

**European Patent Office**

**Office européen des brevets**

(11) Publication number: **0 140 529**
**B1**

(12) **EUROPEAN PATENT SPECIFICATION**

(45) Date of publication of patent specification: **24.02.88**

(51) Int. Cl.⁴: **G 02 B 27/10**

(21) Application number: **84305896.7**

(22) Date of filing: **29.08.84**

(54) Imaging apparatus.

(30) Priority: **09.09.83 GB 8324247**

(43) Date of publication of application:
**08.05.85 Bulletin 85/19**

(45) Publication of the grant of the patent:
**24.02.88 Bulletin 88/08**

(84) Designated Contracting States:
**DE GB**

(56) References cited:
**EP-A-0 090 066**
**US-A-4 005 285**
**US-A-4 264 810**
**US-A-4 323 925**

(73) Proprietor: **CROSFIELD ELECTRONICS LIMITED**
**De La Rue House 3/5 Burlington Gardens**
**London W1A 1DL (GB)**

(72) Inventor: **Aughton, John Edward**
**49 Neale Close**
**London N2 OLF (GB)**

(74) Representative: **Skone James, Robert Edmund**
**et al**
**GILL JENNINGS & EVERY 53-64 Chancery Lane**
**London WC2A 1HN (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention)..

Courier Press, Leamington Spa, England.

## Description

The invention relates to apparatus for detecting an area of information such as a line or area of picture information.

Photo-detector arrays are commonly used in imaging systems for imaging a line or area of picture information. One of their limitations, however, is that the number of picture elements available within the image field is normally limited by the number of detector elements. Linear charge coupled device (CCD) arrays with 3456 elements in a straight line are currently available. However, any detector array is mounted in a block which has a finite portion at each end beyond the ends of the detectors and it is therefore impossible to position a number of detector arrays end to end without losing the ability to sense that part of the image falling between each detector array. Longer detector arrays have been made but these suffer from problems of temperature stability and manufacturing cost. The extent of the problem can be appreciated when it is considered that in a high resolution imaging system it is typically necessary to have a line of 10,000 picture elements, and this would require the use of several linear arrays end to end.

One attempt at solving this problem is to arrange the arrays on either side of an optical beam splitter as for example illustrated in US—A—4,005,285. Unfortunately, the optical performance requirements of the beam splitter make the system very expensive both in development and production. It is a high risk approach which is likely to suffer problems with spectral matching of the two beams, ghost images, polarisation, and alignment.

An alternative arrangement (Sprague and Turner, Optical Engineering Vol. 20, No. 6) suggests a matrix of small apertures superimposed onto an area array. For full effectiveness this method requires a custom made chip which is costly.

In accordance with the present invention, object scanning apparatus comprises an imaging system for receiving light rays from an illuminated object; image multiplying means arranged to receive light rays from the imaging system, to separate the light rays into two subsidiary light beams, and to guide the subsidiary light beams towards and image plane at which two images of the object are focused by the imaging system, and at least one detector array arranged in the image plane at the position of each image to detect a respective subsidiary portion of each image, the arrangement being such that the subsidiary portions together form a continuous portion of the image, and is characterised in that the image multiplying means is positioned at the pupil of the imaging system and comprises side by side a first portion for refracting incident light rays without focusing effect and a second portion through which incident light rays pass substantially unrefracted.

The essential difference between this invention and conventional beam splitting arrangements is that each image is formed by different light rays originating from the object rather than from common light rays which have been split. The apparatus in accordance with the invention thus has several advantages over the known beam splitter arrangement. For example, scratches on the image multiplying means cause less "noise" on the detector arrays compared with scratches on the beam splitters since the scratches will only affect one or some of the images and not be common to all the images. Other advantages are that there are no longer problems with spectral matching, polarisation, or ghost images.

Normally, the area of information will comprise a line of information in which case the detector arrays will be linear arrays. Other non-linear areas could, however, be detected.

As will be appreciated, by providing a number of images of the area of information, the detector arrays can effectively be optically abutted without physically coming into contact with each other. Typically, one detector array will be positioned at each image plane although for large images, more than one detector array could be positioned at one or more of the image planes.

Preferably, a single imaging means such as a convex lens is used.

The image multiplying means is positioned at the pupil of the imaging system so that the image multiplying means effectively splits the pupil of the imaging system. To determine the position of the pupil of a lens, a variable aperture is positioned at the lens and the pupil forms the aperture when the aperture is so positioned that variation in its size causes lightening or darkening of an image without affecting the boundary of the image.

An example of apparatus in accordance with the invention will now be described with reference to the accompanying drawings, in which:—

Figure 1 illustrates an example of the invention; and,

Figures 2A and 2B are views taken on the lines A—A and B—B on Figure 1 respectively.

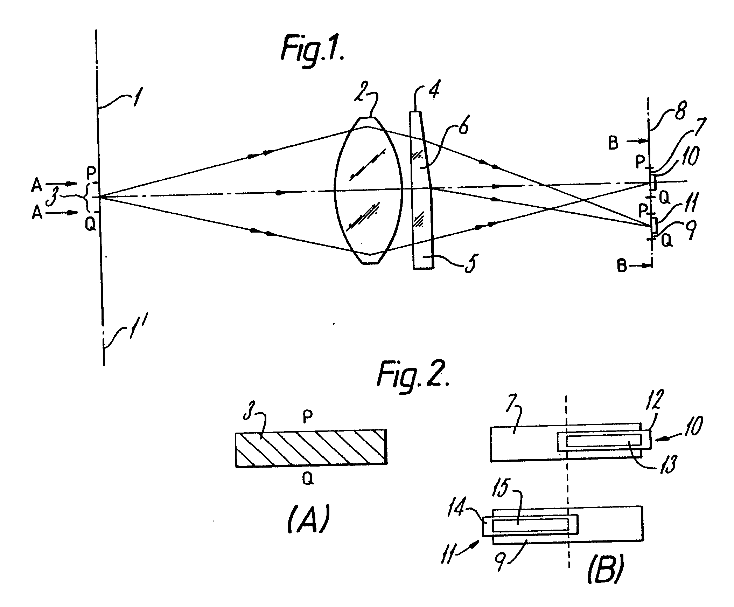

Figure 1 illustrates an illuminated original, which may be a picture or other information, 1 which is positioned in the object plane of a converging lens 2. In colour scanning apparatus the original will comprise a transparency mounted on a transparent cylinder 1' shown partly in phantom. Such apparatus could be our Crosfield Magnascan 645. An area 3 of the original 1 which is to be scanned has a width indicated by PQ and a length extending into the paper. Light beams from a source (not shown) pass through the area 3 and are received by the imaging lens 2 which transmits the light beams to a glass plate 4 positioned at the pupil of the lens 2. The glass plate 4 comprises a lower portion 5, as seen in the drawing, having parallel sides and an upper portion 6 having a wedge shape. The glass plate 4 effectively splits the pupil of the lens 2 so that two subsidiary light beams are generated. Light transmitted through the parallel sided portion 5 of the glass plate 4 forms a first image 7 in an image plane 8 while light transmitted through the wedge shaped portion 6 of the glass plate 4 forms a second image 9 also in the image plane 8 but spaced from the first image 7. A first linear detector array 10 of photo-detector elements such as CCDs, is positioned to sense a subsidiary portion of the first image 7 while a second detector array 11 is positioned to detect a different subsidiary portion of the second image 9.

The arrangement of the detector arrays 10, 11 and the images 7, 9 can be seen more clearly in Figure 2. Figure 2A illustrates the area 3 of the original 1 which is to be scanned. Figure 2B illustrates the first and second images 7, 9 which are formed by the lens 2 and the glass plate 4 in the image plane 8. The detector array 10 comprises a support block 12 on which are mounted CCD photo-detector elements 13. Typically each array 10 will comprise 3456 elements 13. It will be seen that the support block 12 extends beyond the ends of the photo-detector elements 13. The detector array 10 is positioned so that the right hand subsidiary portion, as seen in the drawing, of the first image 7 is detected by the array of elements 13. The second detector array 11 comprises a support block 14 on which is mounted an array of CCD photo-detector elements 15. Again, it will be seen that the support block 14 extends beyond either end of the elements 15. The detector array 11 is positioned to detect the left-hand subsidiary portion, as seen in the drawing, of the second image 9. As can be seen in Figure 2B, the two arrays of elements 13, 15 are aligned so that effectively a continuous portion of the area 3 is detected. Thus it can be seen that the left-hand end of the elements 13 optically abuts the righthand end of the elements 15.

Where the apparatus is incorporated into colour scanning apparatus, the cylinder 1' will be gradually rotated so that the original 1 will move in a downward direction, as seen in the drawings. This then enables successive lines of the original to be scanned, the lengths of the line corresponding to the total length of the elements 13, 15. The converging lens 2, the splitting arrangement 4 and the detector arrays 10, 11 will be incorporated into a conventional analyse head of the colour scanning apparatus and the outputs from the detectors 10, 11 will be fed to conventional processing electronics such as described in European Patent Specification No. 0090596.

## Claims

1. Object scanning apparatus comprising an imaging system (2) for receiving light rays from an illuminated object (3); image multiplying means (4) arranged to receive light rays from the imaging system, to separate the light rays into two subsidiary light beams, and to guide the subsidiary light beams towards an image plane (8) at which two images (7, 9) of the object are focused by the imaging system, and at least one detector array (10, 11) arranged in the image plane at the position of each image (7, 9) to detect a respective subsidiary portion of each image, the arrangement being such that the subsidiary portions together form a continuous portion of the image, characterised in that the image multiplying means (4) is positioned at the pupil of the imaging system (2) and comprises side by side a first portion (6) for refracting incident light rays without focusing effect and a second portion (5) through which incident light rays pass substantially unrefracted.

2. Apparatus according to claim 1, wherein the detector arrays comprise linear arrays (10, 11).

3. Apparatus according to claim 1 or claim 2, wherein the detector arrays comprise CCD arrays (10, 11).

4. Apparatus according to any of claims 1 to 3, wherein the image multiplying means comprises a glass plate (4) having a wedge shaped portion (6) for refracting incident light rays and an integral parallel sided portion (5) through which incident light rays pass substantially unrefracted.

5. Colour scanning apparatus comprising object scanning apparatus in accordance with any of the preceding claims.

### Patentansprüche

1. Objektscanner mit einem Abbildungssystem (2), das Lichtstrahlen von einem beleuchteten Objekt (3) empfängt, einem Abbildvervielfältiger (4), der Lichtstrahlen vom Abbildungssystem empfängt, um die Lichtstrahlen in zwei Hilfslichtstrahlen zu trennen, und die Hilfslichtstrahlen zu einer Abbildebene (8) lenkt, wo zwei Abbilder (7, 9) des Objekts vom Abbildungssystem fokussiert werden, und mindestens einer Detektorvorrichtung (10, 11), die in der Abbildebene an der Stelle jedes Abbilds (7, 9) angeordnet ist, um einen jeweiligen Hilfsabschnitt jedes Abbilds zu erfassen, wobei die Anordnung so getroffen ist, daß die Hilfsabschnitte zusammen einen kontinuierlichen Abschnitt des Abbilds bilden, dadurch gekennzeichnet, daß der Abbildvervielfältiger (4) in der Pupille des Abbildungssystems (2) positioniert ist und nebeneinanderliegend einen ersten Abschnitt (6) zum Brechen einfallenden Lichtstrahlen ohne Fokussierwirkung und einen zweiten Abschnitt (5) umfaßt, durch den einfallende Lichtstrahlen im wesentlichen ungebrochen hindurchgehen.

2. Scanner nach Anspruch 1, dadurch gekennzeichnet, daß die Detektorvorrichtung eine linear Vorrichtung (10, 11) umfaßt.

3. Scanner nach Anspruch 1 oder 2, dadurch gekennzeichnet, daß die Detektorvorrichtung eine ladungsgekoppelte Vorrichtung (10, 11) umfaßt.

4. Scanner nach einem der Ansprüche 1—3, dadurch gekennzeichnet, daß der Abbildvervielfältiger eine Glasplatte (4) mit einem keilförmigen Abschnitt (6) zum Brechen einfallender Lichtstrahlen und einen integralen parallelseitigen Abschnitt (5) umfaßt, durch den einfallende Licht-

strahlen im wesentlichen ungebrochen hindurch-gehen.

5. Farbscanner, der einen Objektscanner nach einem der vorhergehenden Ansprüche umfaßt.

**Revendications**

1. Appareil de balayage d'objet, comprenant un système (2) de formation d'image destiné à recevoir des rayons lumineux de la part d'un objet éclairé (3); un moyen (4) de multiplication d'image conçu pour recevoir des rayons lumineux de la part du système de formation d'image, afin de séparer les rayons lumineux en deux faisceau lumineux subsidiaires et de guider les faisceaux lumineux subsidiaires vers un plan d'image (8) au niveau duquel deux images (7, 9) de l'objet sont focalisées par le système de formation d'image, et au moins un réseau de détecteurs (10, 11) disposé dans le plan d'image à la position de chaque image (7, 9) afin de détecter une partie subsidiaire respective de chaque image, la disposition étant telle que les parties subsidiaires forment ensemble une partie continue de l'image, caractérisé en ce que le moyen de multiplication d'image (4) est placé à la pupille du système de formation d'image (2) et comprend, côte à côte, une première partie (6) servant à réfracter les rayons lumineux incidents sans produire d'effet de focalisation et une deuxième partie (5) à travers laquelle les rayons lumineux incidents passent sans être sensiblement réfractés.

2. Appareil selon la revendication 1, où les réseaux de détecteurs comprennent des réseaux linéaires (10, 11).

3. Appareil selon la revendication 1 ou 2, où les réseaux de détecteurs comprennent des réseaux de dispositifs à couplage de charge (10, 11).

4. Appareil selon l'une quelconque des revendications 1 à 3, où le moyen de multiplication d'image comprend une plaque de verre (4) possédant une partie en forme de coin (6) qui sert à réfracter les rayons lumineux incidents et une partie à côtés parallèles solidaire (5) à travers laquelle les rayons lumineux incidents passent sans être sensiblement réfractés.

5. Appareil de balayage en couleur comprenant l'appareil de balayage d'objet selon l'une quel-conque des revendications précédentes.

Fig.1.

Fig.2.

(A)

(B)

0 140 529